# EUROPÄISCHE PATENTSCHRIFT

(11) **EP 3 592 991 B1**
(45) Veröffentlichungstag und Bekanntmachung des Hinweises auf die Patenterteilung: **18.08.2021**
(21) Anmeldenummer: 18706737.6
(22) Anmeldetag: 22.02.2018
(51) Int. Cl.: F15B 20/00, F15B 19/00, F15B 5/00

(54) **VERFAHREN ZUM ANSTEUERN EINES HYDRAULISCHEN STELLANTRIEBES, STEUEREINRICHTUNG UND STELLANTRIEBSTEUERUNG**
METHOD FOR ACTIVATING A HYDRAULIC ACTUATOR DRIVE, CONTROL DEVICE AND ACTUATOR DRIVE CONTROLLER
PROCÉDÉ POUR LA COMMANDE D'UN ACTIONNEUR HYDRAULIQUE, DISPOSITIF DE COMMANDE ET COMMANDE D'ACTIONNEUR

(30) Priorität: 06.03.2017 DE 102017104559; 30.03.2017 DE 102017106840
(43) Veröffentlichungstag der Anmeldung: 15.01.2020
(73) Patentinhaber: Voith Patent GmbH, 89522 Heidenheim (DE)
(72) Erfinder: ORTNER, Christian, 91583 Schillingsfürst (DE); HOFMANN, Friedrich, 74564 Crailsheim (DE)
(74) Vertreter: Voith Patent GmbH - Patentabteilung
(86) Internationale Anmeldenummer: PCT/EP2018/054354
(87) Internationale Veröffentlichungsnummer: WO 2018/162243

(56) Entgegenhaltungen:
- EP-A1- 0 128 284
- EP-A2- 2 228 545
- EP-A2- 2 682 611
- US-A- 5 272 647

## Beschreibung

Die vorliegende Erfindung betrifft ein Verfahren zum Ansteuern eines hydraulischen Stellantriebes, eine Steuereinrichtung zum Ansteuern von wenigstens einem Proportionalventil zur Ansteuerung eines einen Aktuator umfassenden hydraulischen Stellantriebes und eine Stellantriebsteuerung, im Einzelnen gemäß den Oberbegriffen der unabhängigen Patentansprüche.

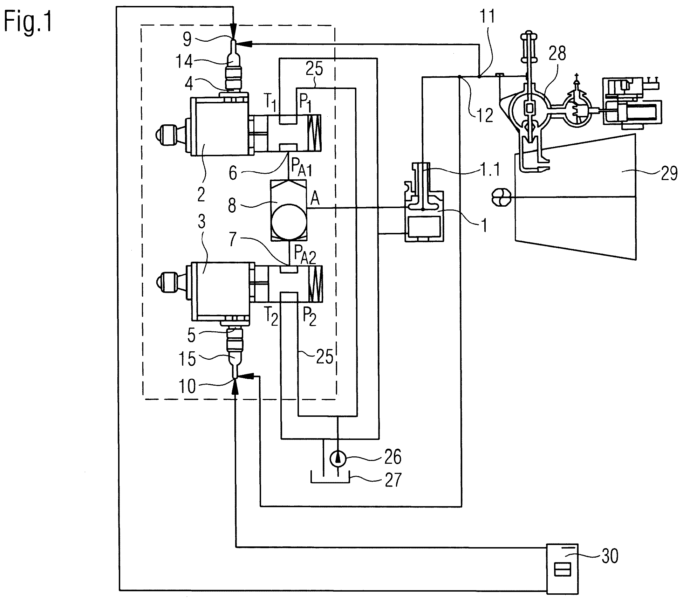

Stellantriebsteuerungen sind beispielsweise in Form eines Wegeschiebermoduls bekannt geworden. Bei einem bekannten gattungsgemäßen Wegeschiebermodul, wie dies in der Figur 1 dargestellt ist, sind zwei Wegeschieber redundant zur Erzeugung eines hydraulischen Eingangsdruckes für den Stellantrieb, beispielsweise einen Stellzylinder, angeordnet, um den Stellantrieb mit dem hydraulischen Eingangsdruck zu beaufschlagen, sodass der Stellantrieb beziehungsweise dessen Aktuator in Abhängigkeit des hydraulischen Eingangsdruckes bewegt wird. Der Stellantrieb kann beispielsweise wiederum ein Ventil bewegen, das den Massenstrom zur Versorgung einer Kraft- oder Arbeitsmaschine steuert. Mit einem solchen Wegeschiebermodul lässt sich der Massenstrom sehr präzise und hochdynamisch regeln.

Mit Bezug auf die Figur 1 weist das bekannte Wegeschiebermodul zur Ansteuerung des hydraulischen Stellantriebes 1, der einen Aktuator 1.1 aufweist, die zwei redundant angeordneten Wegeschieber 2, 3 auf. In der Figur 1 ist das Wegeschiebermodul schematisch durch die gestrichelte Linie abgegrenzt.

Jeder Wegeschieber 2, 3 ist als elektrohydraulisches Proportionalventil mit einem elektrischen Eingang 4, 5 und einem hydraulischen Ausgang 6, 7 ausgeführt. Dem jeweiligen elektrischen Eingang 4, 5 wird ein Signal beziehungsweise ein elektrischer Strom zugeführt, welcher die Stellung des jeweiligen Wegeschiebers 2, 3 und damit den von diesem am hydraulischen Ausgang 6, 7 abgegebenen hydraulischen Druck bestimmt. In der in der Figur 1 gezeigten Ausgestaltung und auch in einer Ausgestaltung der vorliegenden Erfindung wandelt jeder Wegeschieber 2, 3 in Verbindung mit dem Aktuator 1 einen konstanten Eingangsdruck beziehungsweise hydraulischen Eingangsdruck, der am jeweiligen Druckeingang 25 anliegt und beispielsweise mittels einer Pumpe 26, die aus einem Hydrauliktank 27 fördert, erzeugt wird, in einen variablen Stellhub. Das am elektrischen Eingang 4, 5 anliegende Signal beziehungsweise die entsprechende Stromstärke, beispielsweise zwischen 4 und 20 mA, gibt den Hub für den Stellantrieb 1 beziehungsweise dessen Aktuator 1.1 vor.

Die beiden Wegeschieber 2, 3 sind über eine gemeinsame hydraulische Druckauswahleinrichtung 8 zur Ansteuerung des Stellantriebes 1 mit einem gemeinsamen Eingangsdruck zusammengeschaltet. Über die Druckauswahleinrichtung 8 wird der Druck am hydraulischen Ausgang 6 und/oder hydraulischen Ausgang 7 der beiden Wegeschieber 2, 3 dem hydraulischen Stellantrieb 1 zugeführt, sodass dessen Aktuator 1.1 in Abhängigkeit des zugeführten hydraulischen Druckes eine bestimmte Position einnimmt beziehungsweise einen bestimmten Hub ausführt. In Abhängigkeit des Hubes wiederum wird das Ventil 28 mehr oder minder geöffnet, welches den Massenstrom zur Versorgung einer Kraft- oder Arbeitsmaschine, hier beispielsweise einer Dampfturbine 29, einstellt.

Jeder Wegeschieber 2, 3 umfasst eine elektronische Überwachungsschaltung, die die Fehlfunktion des Wegeschiebers 2, 3 erkennt. Bei einer Fehlfunktion stellt die hydraulische Druckauswahleinrichtung 8 sicher, dass der andere Wegeschieber 2, 3 die Funktion übernimmt. Damit ist eine Beseitigung der Fehlfunktion während des Betriebes und sogar der Austausch eines Wegeschiebers 2, 3 während des Betriebes möglich. Die Redundanz der Wegeschieber 2, 3 erhöht damit die Betriebssicherheit und die Verfügbarkeit des Wegeschiebermoduls und verringert Stillstandszeiten der angeschlossenen Kraft- oder Arbeitsmaschine.

Für jeden Wegeschieber 2, 3 ist eine Positionserfassungseinrichtung 11, 12 vorgesehen, die die Position des Aktuators 1.1 des Stellantriebs 1 erfasst und einen entsprechenden Positionsistwert an den im jeweiligen Wegeschieber 2, 3 vorgesehenen Positionsregler 14, 15 meldet.

Von einem Leitsystem 30 wird jeweils ein Positionssollwert für jeden Wegeschieber 2, 3 vorgegeben und ebenfalls dem jeweiligen Positionsregler 14, 15 zugeführt. Entsprechend ist für jeden Wegeschieber 2, 3 ein Positionssollwerteingang 9, 10 vorgesehen und der Positionsregler 14, 15 regelt die Soll-/lstwert-Differenz aus, damit der Aktuator 1.1 des Stellantriebs 1 den gewünschten Hub ausführt beziehungsweise die gewünschte Position einnimmt.

Problematisch bei der dargestellten Ausführungsform ist, dass beim Umschalten im laufenden Betrieb, zum Beispiel durch Ausfall einer Positionserfassung 11, 12, von einem Wegeschieber 2 auf den anderen Wegeschieber 3 und umgekehrt Druckeinbrüche auftreten können. Ferner kann nicht ohne weiteres überprüft werden, ob einer der beiden Wegeschieber 2, 3 defekt ist beziehungsweise bei einem Umschaltvorgang der entsprechend andere Wegeschieber 2, 3 die Funktion alleine übernehmen kann.

Bei Ausfall der entsprechenden Positionserfassung 11, 12 kann der zugehörige Wegeschieber 2, 3 nicht mehr betrieben werden, auch wenn dieser noch voll funktionsfähig ist. Ferner besteht die Gefahr, dass innerhalb des Hydraulikteils, vor allem bei längerer konstanter Fahrweise, Partikelablagerungen zu einem eingeschränkten Fahrbereich des Stellantriebs 1 führen. Im Extremfall kann dann das Ventil 28 nicht mehr geschlossen werden.

Auch bei Ausfall einer Sollwertvorgabe kann der zugehörige Wegeschieber 2, 3 nicht mehr betrieben werden, selbst wenn er noch voll funktionsfähig ist.

US 5 272 647 A offenbart eine Ventiltesteinheit, bei der mittels einer Basiseinheit der Eingang oder der Ausgang einer Stelleinrichtung überschrieben werden kann. Zum weiteren Stand der Technik wird verwiesen auf EP 2 228 545 A2, EP 2 682 611 A2 und EP 0 128 284 A1.

Der vorliegenden Erfindung liegt daher die Aufgabe zugrunde, ausgehend von dem bekannten Wegeschiebermodul als Stellantriebsteuerung zur Ansteuerung eines hydraulischen Stellantriebs zum einen ein Verfahren zum Ansteuern eines hydraulischen Stellantriebes anzugeben, das zumindest ein oder mehrere der oben genannten Nachteile vermeidet. Ferner soll eine entsprechende Steuereinrichtung und eine Stellantriebsteuerung angegeben werden.

Die erfindungsgemäße Aufgabe wird durch ein Verfahren, eine Steuereinrichtung und eine Stellantriebsteuerung gemäß den unabhängigen Ansprüchen gelöst. In den abhängigen Ansprüchen sind vorteilhafte und besonders zweckmäßige Ausgestaltungen der Erfindung angegeben.

Ein erfindungsgemäßes Verfahren zum Ansteuern eines hydraulischen Stellantriebes, der einen Aktuator aufweist, dessen Position mit wenigstens einem elektrohydraulischen Proportionalventil, das wenigstens einen elektrischen Eingang und wenigstens einen hydraulischen Ausgang aufweist, eingestellt wird, umfasst die folgenden Schritte:
- Erfassen der Position des Aktuators und Erzeugen eines Positionsistwertes entsprechend der erfassten Position;
- Vorgeben eines Positionssollwertes und Ausregeln mit dem wenigstens einen elektrohydraulischen Proportionalventil einer Soll-/Istwert-Differenz, sodass der Aktuator eine Position entsprechend dem Positionssollwert einnimmt; wobei der Positionssollwert in Abhängigkeit einer Vorgabe für eine gewünschte Position des Aktuators vorgegeben wird, wobei diese Vorgabe beispielsweise von einem externen System erzeugt werden kann, zu welchem der Aktuator beziehungsweise ein mit dem Aktuator betätigtes Bauteil gehört, wie beispielsweise einer Turbinensteuerung, wenn mit dem Aktuator ein Ventil einer Turbine betätigt wird;
- auch bei einer unveränderten Vorgabe für eine gewünschte Position des Aktuators, also insbesondere einer unveränderten Vorgabe durch das externe System, wird erfindungsgemäß der Positionssollwert variiert.
Das wenigstens eine elektrohydraulische Proportionalventil kann beispielsweise als Wegeschieber ausgeführt sein. Jedoch kommen auch andere Ausführungsformen in Betracht, bei welchen ein elektrisches Signal in ein hydraulisches Signal beziehungsweise in einen hydraulischen Druck umgesetzt wird.

Erfindungsgemäß weist der hydraulische Stellantrieb wenigstens zwei elektrohydraulische Proportionalventile auf, die jeweils wenigstens einen elektrischen Eingang und wenigstens einen hydraulischen Ausgang aufweisen und deren hydraulische Ausgänge zur Ansteuerung des Stellantriebes mit einem gemeinsamen hydraulischen Eingangsdruck zusammengeschaltet sind. Bei dieser Ausgestaltung kann bei der Positionssollwertvariation, auch Positionssollwertmanipulation genannt, des einem der elektrohydraulischen Proportionalventile zugeführten Sollwertes eine Druckänderung in dem hydraulischen Ausgang dieses elektrohydraulischen Proportionalventiles durch eine mit dem wenigstens einen anderen elektrohydraulischen Proportionalventil eingestellte Änderung des Druckes in dessen hydraulischen Ausgang kompensiert werden, um den gemeinsamen hydraulischen Eingangsdruck für den Stellantrieb konstant zu halten. Dies bedeutet, dass obwohl der Positionssollwert erfindungsgemäß auch dann manipuliert wird, wenn dies durch die "externe" Sollwertvorgabe eigentlich nicht notwendig ist, eine unerwünschte Veränderung der Position des Aktuators zumindest weitgehend ausgeschlossen wird. Zugleich wird durch die in der Regel geringfügige Variation des Positionssollwertes das eingangs dargestellte Problem des eingeschränkten Fahrbereichs des Stellantriebs vermieden und die Reaktionszeit im System reduziert, wodurch wesentlich geringere Druckeinbrüche gewährleistet werden.

Die Variation des Positionssollwertes kann gemäß einer Ausführungsform der Erfindung in Form einer regelmäßigen oder unregelmäßigen Schwingungsüberlagerung auf den in Abhängigkeit der Vorgabe für die gewünschte Position des Aktuators vorgegebenen Sollwert erfolgen. Dem Sollwert wird somit ein wellenförmiger oder stufenförmiger Verlauf aufgeprägt oder ein wellenförmiger oder stufenförmiger Verlauf, der um einen Nullwert "schwingt", aufaddiert, wodurch längere konstante Positionen des wenigstens einen elektrohydraulischen Proportionalventils oder anderer zur Ansteuerung des Stellantriebs verwendeter Komponenten vermieden werden.

Alternativ kann die Variation des Positionssollwertes auch in Form diskreter Vergrößerungen und/oder Reduzierungen des in Abhängigkeit der Vorgabe für die gewünschte Position des Aktuators vorgegebenen Sollwertes erfolgen. Bei dieser Ausführungsform werden dem Sollwert sozusagen einzelne Impulse aufgeprägt beziehungsweise aufaddiert, im Sinne einer Sollwertvergrößerung oder einer Sollwertverkleinerung, die dann anschließend wieder ausgeregelt werden können. In anderen Worten wird jeweils für eine kurze Zeitspanne ein zu großer oder zu kleiner Sollwert vorgegeben, bevor der "passende" Sollwert wieder eingestellt wird.

Gemäß einer Ausführungsform der Erfindung wird zusätzlich zu der dargestellten Sollwertvariation die Funktion der elektrohydraulischen Proportionalventile und insbesondere weiterer zur Ansteuerung verwendeter Komponenten dadurch getestet, dass nacheinander die den elektrohydraulischen Proportionalventilen zugeführten Sollwerte gezielt reduziert werden und überwacht wird, ob sich der Druck im jeweiligen hydraulischen Ausgang entsprechend ändert. Prinzipiell ist ein solcher Test auch durch eine gezielte Erhöhung der zugeführten Sollwerte möglich, mit anschließender Überwachung, ob sich der Druck im jeweiligen hydraulischen Ausgang entsprechend ändert. Die Reduzierung hat sich in der Praxis jedoch als besonders günstig erwiesen.

Bevorzugt wird bei diesem Test die Druckreduzierung in einem hydraulischen Ausgang durch einen eingestellten Druckanstieg in einem anderen hydraulischen Ausgang, beziehungsweise bei der zweiten genannten Ausführungsform durch eine eingestellte Druckreduzierung in einem anderen hydraulischen Ausgang, kompensiert, um den gemeinsamen hydraulischen Eingangsdruck für den Stellantrieb konstant zu halten und somit auch bei dem Test die Position des Stellantriebes nicht unerwünscht zu beeinflussen.

Bevorzugt werden nach einer Kompensation durch Änderung des Druckes in dem anderen hydraulischen Ausgang die Drücke in den hydraulischen Ausgängen einander wieder angeglichen. Dies gilt für die dargestellte Positionssollwertvariation (auch Positionssollwertmanipulation genannt) und/oder für den genannten Test.

Gemäß einer Ausführungsform ist die Variation des Positionssollwertes und/oder das Durchführen des Tests abstellbar. Insbesondere, wenn bei der Variation des Positionssollwertes ungeeignete Drücke in dem entsprechenden hydraulischen Ausgang des jeweiligen elektrohydraulischen Proportionalventils festgestellt werden, wird die Variation des Positionssollwertes beendet und nur noch der Positionssollwert in Abhängigkeit einer Vorgabe für eine gewünschte Position des Aktuators verwendet. Entsprechendes gilt für den Test. Bei nicht plausiblen festgestellten Drücken in einem hydraulischen Ausgang wird der Test nicht mehr durchgeführt und insbesondere wird eine optische und/oder akustische Warnung und/oder eine Warnmeldung ausgegeben.

Bevorzugt wird die Position des Aktuators mit zwei oder drei Positionserfassungseinrichtungen erfasst und aus dem von den Positionserfassungseinrichtungen erzeugten Positionsistwerten wird eine 1 von 2, 1 von 3 oder 2 von 3 Auswahl durchgeführt, wobei nur der oder die ausgewählten Positionsistwerte zur Ausregelung der Soll-/Istwert-Differenz beziehungsweise zur Variation des Positionssollwertes herangezogen werden. Auch ist es möglich, aus den erzeugten Positionsistwerten einen Mittelwert zu bilden und diesen Mittelwert zur Ausregelung der Soll-/Istwert-Differenz beziehungsweise zur Variation des Positionssollwertes heranzuziehen.

Eine erfindungsgemäße Steuereinrichtung zum Ansteuern von wenigstens einem elektrohydraulischen Proportionalventil, das wiederum zur Ansteuerung eines einen Aktuator umfassenden hydraulischen Stellantriebes ausgeführt ist, weist Ein- und Ausgänge für wenigstens einen Positionsistwert und einen Positionssollwert der Position des Aktuators auf und ist eingerichtet, ein erfindungsgemäßen Verfahren auszuführen.

Die erfindungsgemäße Stellantriebsteuerung ist zur Ansteuerung eines hydraulischen Stellantriebes, der einen Aktuator aufweist, beispielsweise zur Ansteuerung eines Hydraulikzylinders, ausgeführt. Sie umfasst wenigstens zwei redundant angeordnete elektrohydraulische Proportionalventile zur Erzeugung eines hydraulischen Eingangsdruckes für den Stellantrieb. Redundant angeordnet bedeutet, dass jedes elektrohydraulische Proportionalventil allein in der Lage ist, die Funktion der Stellantriebsteuerung, das heißt die zur Verfügung Stellung des hydraulischen Druckes zur Ansteuerung des Stellantriebes zu gewährleisten.
Jedes elektrohydraulische Proportionalventil weist wenigstens einen elektrischen Eingang und wenigstens einen hydraulischen Ausgang auf.
Die hydraulischen Ausgänge der wenigstens zwei elektrohydraulischen Proportionalventile sind über eine gemeinsame hydraulische Druckauswahleinrichtung, die erfindungsgemäß als Maximaldruckauswahleinrichtung ausgeführt ist, zur Ansteuerung des Stellantriebes mit einem gemeinsamen Eingangsdruck zusammengeschaltet.
Die Stellantriebsteuerung weist einen Positionssollwerteingang für jedes elektrohydraulische Proportionalventil auf, der mit dem elektrischen Eingang des jeweiligen elektrohydraulischen Proportionalventils verbunden ist, sodass dem jeweiligen elektrohydraulischen Proportionalventil ein Positionssollwert vorgegeben werden kann.
Es ist wenigstens eine Positionserfassungseinrichtung zur Erfassung der Position des Aktuators des Stellantriebes vorgesehen, wobei die Positionserfassungseinrichtung einen Positionsistwert erzeugt.
Jedes elektrohydraulische Proportionalventil umfasst einen Positionsregler, der mit einem Positionssollwert aus dem Positionssollwerteingang und dem Positionsistwert aus der Positionserfassungseinrichtung zur Ausregelung einer Soll-/Istwert-Differenz ausgeführt ist.
Die erfindungsgemäße Stellantriebsteuerung weist wenigstens eine elektronische Schalteinrichtung auf, mit welcher wahlweise wenigstens ein Positionssollwert aus einem Positionssollwerteingang und/oder ein Positionsistwert aus der Positionserfassungseinrichtung durch einen Vorgabewert ersetzt werden kann. Diese Möglichkeit des Ersatzes des Positionssollwertes, der insbesondere von einem externen System für eine (von diesem System) gewünschte Position des Aktuators vorgegeben wird, ermöglicht die zuvor beschriebene Sollwertvariation beziehungsweise Sollwertmanipulation, sodass anstelle des ursprünglichen Positionssollwertes aus dem Positionssollwerteingang ein geänderter Positionssollwert für die Ansteuerung des Aktuators beziehungsweise für die Ausregelung der Soll-/Istwert-Differenz herangezogen werden kann.

Aus den vom externen System vorgegeben Positionssollwerten kann je nach Anzahl der vorgegebenen Sollwerte eine 1 von 2, 1 von 3 oder 2 von 3 Auswahl getroffen werden und der jeweils ausgewählte Wert oder die jeweils ausgewählten Werte als Positionsollwert(e) verwendet werden. Auch eine Mittelwertbildung und die Verwendung des Mittelwertes ist möglich.

Die elektronische Schalteinrichtung kann gemäß einer Ausführung der Erfindung durch Software zur Verfügung gestellt werden, gemäß einer anderen Ausgestaltung durch Hardware. Bei einer Software-Lösung ist entsprechend ein softwareimplementiertes logisches Modul vorgesehen, das den Positionssollwert und/oder Positionsistwert durch den Vorgabewert ersetzt.

Durch die erfindungsgemäße Ausgestaltung können die beiden elektrohydraulischen Proportionalventile auch dann noch betrieben werden, wenn ein Positionssollwert und/oder ein Positionsistwert ausfällt. Ferner ist eine Sollwertmanipulation möglich, welche einen Test der elektrohydraulischen Proportionalventile beziehungsweise des Stellantriebes insbesondere auch im laufenden Betrieb ermöglicht. Somit kann beispielsweise überprüft werden, ob sich ein mit dem Stellantrieb betätigtes Ventil noch schließen lässt.

Das oder die elektrohydraulischen Proportionalventile können, wie dargelegt, bevorzugt als Wegeschieber ausgeführt sein. Dementsprechend kann ein Wegeschiebermodul, wie eingangs dargelegt, aufgebaut werden.

Mit Hilfe einer Sollwertmanipulation beziehungsweise der dargestellten Sollwertvariation kann ein Druckgleichgewicht im Wegeschiebermodul erzeugt werden, das die Bewegung des Aktuators des Stellantriebes und damit des angeschlossenen Ventils im Falle des Ausfalls eines Wegeschiebers minimiert. Damit können vergleichsweise geringe Druckeinbrüche sichergestellt werden. Durch den ständigen Vergleich aktueller Drücke an den Ausgängen der Wegeschieber und ein ständiges Nachregeln wird nämlich eine schnelle Reaktionsfähigkeit des Systems sichergestellt.

Durch die zuvor dargestellte sequentielle Sollwertmanipulation/Sollwertvariation bei gleichzeitiger Messung der zugehörigen Drücke, insbesondere am jeweiligen hydraulischen Ausgang der Wegeschieber, kann vorteilhaft insbesondere sogar im laufenden Betrieb die Funktionstüchtigkeit der beiden Wegeschieber überprüft werden. Analog der allgemeinen Darstellung für beliebig ausgeführte elektrohydraulische Proportionalventile wird auch hier vorteilhaft der Sollwert des ersten Wegeschiebers abgesenkt, der Druck im Ausgang entsprechend überwacht, ob dieser der Sollwertabsenkung folgt, und mit dem zweiten Wegeschieber wird die Druckabsenkung kompensiert, damit der Stellantrieb nicht negativ beeinflusst wird. Anschließend kann die entsprechende Sollwertabsenkung und die Überwachung des zugehörigen Druckes im hydraulischen Ausgang mit dem zweiten Wegeschieber erfolgen, wobei dann die Druckabsenkungskompensation durch den ersten Wegeschieber bewirkt wird.

Günstig ist, dass durch eine Sollwertmanipulation und damit eine geringfügige Bewegung des Aktuators des Stellantriebes eventuelle Partikelablagerungen im Hydraulikteil freigespült werden können.

Wenn zwei oder drei Positionserfassungseinrichtungen vorgesehen sind, die jeweils in Abhängigkeit der erfassten Position des Aktuators einen Positionsistwert erzeugen, kann eine 1 von 2, 1 von 3 oder 2 von 3 Auswertung vorgesehen sein, sodass die beiden Wegeschieber auch dann noch betrieben werden können, wenn einer oder zwei der Positionsistwerte ausfallen, das heißt eine der beiden oder drei oder zwei der drei Positionserfassungseinrichtungen nicht mehr ordnungsgemäß arbeiten oder die Signalübertragung gestört ist.

Auch bei Ausfall einer Sollwertvorgabe können die beiden Wegeschieber noch betrieben werden, indem ein entsprechender Vorgabewert als Ersatzwert herangezogen wird, insbesondere auch durch eine 1 von 2, 1 von 3 oder 2 von 3 Auswahl.

Günstig ist, dass aufgrund der zuvor dargestellten Selbsttestfunktionalität die erweiterten Funktionen der Stellantriebsteuerung im Falle einer Fehlfunktion einfach abgeschaltet werden können, und die Stellantriebsteuerung immer noch die anhand der Figur 1 erweiterte Funktionalität aufweist, sodass zusätzliche Ausfallrisiken vermieden werden.

Gemäß einer Ausführungsform der Erfindung sind mehrere elektronische Schalteinrichtungen vorgesehen, die einzeln zum Ersatz eines Positionssollwertes oder Positionsistwertes schaltbar sind.

Die wenigstens eine Schalteinrichtung kann beziehungsweise die Schalteinrichtungen können beispielsweise als Relais, insbesondere redundante Relais ausgeführt sein.

Günstig ist wie dargestellt ferner, wenn wenigstens zwei oder drei Positionserfassungseinrichtungen zur Erzeugung jeweils eines Positionsistwertes in Abhängigkeit der Position des Aktuators vorgesehen sind.

Die zwei oder drei Positionserfassungseinrichtungen sind vorteilhaft derart mit den wenigstens zwei Schalteinrichtungen verschaltet, dass eine 1 von 2 oder 1 von 3 Auswahl oder eine 2 von 3 Auswahl der erzeugten Positionsistwerte erfolgt. Jeder Schalteinrichtung kann ein eigener Positionsistwert zurückgeführt werden. Alternativ wird nur einer der zwei oder drei Positionsistwerte allen Schalteinrichtungen rückgeführt.

Besonders günstig ist es, wenn vier elektronische Schalteinrichtungen vorgesehen sind, von denen zwei elektronische Schalteinrichtungen jeweils mit einem der Positionssollwerteingänge und dem Positionsregler jeweils eines Wegeschiebers beziehungsweise Proportionalventils verschaltet sind und ferner jeweils einen Vorgabewerteingang aufweisen, und von denen zwei elektronische Schalteinrichtungen jeweils mit dem Positionsregler jeweils eines Wegeschiebers beziehungsweise Proportionalventils und jeweils einer Positionserfassungseinrichtung verschaltet sind und ferner jeweils einen Vorgabewerteingang aufweisen. Damit können die beiden zu den Positionsreglern der beiden Wegeschieber beziehungsweise Proportionalventile rückgeführten Positionsistwerte durch einen Vorgabewert ersetzt werden und ferner die beiden aus einem Leitsystem den Positionssollwerteingängen der beiden Wegeschieber beziehungsweise Proportionalventile zugeführten Positionssollwerte durch jeweils einen Vorgabewert ersetzt werden.

Gemäß einer Ausführungsform der Erfindung ist die wenigstens eine Schalteinrichtung oder ist jede Schalteinrichtung mit einem Schalteingang versehen, über welchen die entsprechende Schalteinrichtung durch Anlegen eines Signals, insbesondere eines vorgegebenen Stromwertes, zum Ersatz eines Positionsistwertes oder eines Positionssollwertes durch einen Vorgabewert schaltbar ist.

Eine erfindungsgemäße Ventilsteuervorrichtung umfasst neben der Stellantriebsteuerung den hydraulisch betätigbaren Aktuator und den Stellantrieb. Der hydraulische Stellantrieb kann beispielsweise einen Druckraum aufweisen, der mit der Druckauswahleinrichtung zu seiner Beaufschlagung mit einem hydraulischen Druck in Abhängigkeit der Stellung der beiden Wegeschieber beziehungsweise Proportionalventile verschaltet ist. Dabei kann der Aktuator mit dem hydraulischen Druck in dem Druckraum gegen die Kraft einer Vorspannfeder des hydraulischen Stellantriebes betätigbar sein.

Gemäß einer Ausführungsform der Erfindung sind einige oder alle der zuvor genannten Komponenten der Stellantriebsteuerung in einer gemeinsamen Baueinheit integriert, welche zwischen ein Leitsystem und die elektrohydraulischen Proportionalventile schaltbar ist. Gemäß einer anderen Ausführungsform sind zumindest Teile der Stellantriebsteuerung in das Leitsystem integriert. Auch ist es möglich, zumindest Teile der Stellantriebsteuerung in die Steuerung der Kraft- oder Arbeitsmaschine zu integrieren, deren Ventil oder sonstiges Bauteil mit dem Stellantrieb betätigt wird.

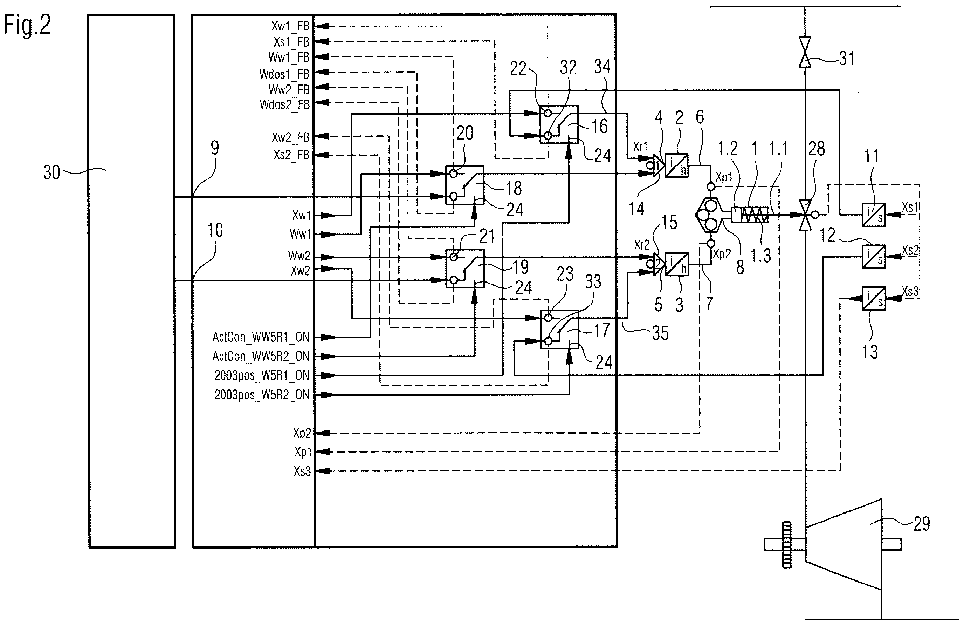

Die Erfindung soll nachfolgend anhand eines Ausführungsbeispiels und der Figur 2 exemplarisch beschrieben werden.

Bei der Figur 2 sind sich entsprechende Bauteile, die bereits in der Figur 1 dargestellt sind, mit denselben Bezugszeichen bezeichnet. Im Einzelnen ist ein Stellantrieb 1 mit einem Aktuator 1.1 dargestellt, welcher ein Ventil 28 einer Kraft- oder Arbeitsmaschine, insbesondere in dessen Massenstromversorgung betätigt. Hier ist beispielhaft eine Dampfturbine 29 dargestellt, die mit Frischdampf versorgt wird, dessen Massenstrom mit dem Ventil 28 eingestellt wird. Die Dampfturbine 29 treibt beispielsweise einen Kompressor oder einen elektrischen Generator an. Dem Ventil 28 kann insbesondere ein Schnellschlussventil 31 vorgeschaltet sein. Anstelle der Dampfturbine 29 könnte jedoch eine andere Kraft- oder Arbeitsmaschine vorgesehen sein.

Das Wegeschiebermodul weist zwei elektrohydraulische Proportionalventile 2, 3 auf, die aufgrund ihrer Ausgestaltung im vorliegenden Ausführungsbeispiel nachfolgend als Wegeschieber bezeichnet werden und die ein elektrisches Signal beziehungsweise eine Stromstärke oder -spannung in einen hydraulischen Druck umwandeln, der einem Druckraum 1.2 des Stellantriebs 1 zugeführt wird, um den Aktuator 1.1 entgegen der Kraft einer Vorspannfeder 1.3 mehr oder minder auszufahren. Hierfür weisen die Wegeschieber 2, 3 jeweils einen elektrischen Eingang 4, 5 und einen hydraulischen Ausgang 6, 7 auf. Die hydraulischen Ausgänge 6, 7 sind mit der Druckauswahleinrichtung 8 verbunden, die wiederum dem Druckraum 1.2 in Abhängigkeit des hydraulischen Druckes an den hydraulischen Ausgängen 6, 7 einen gemeinsamen Eingangsdruck zuführt.

Obwohl vorliegend somit die Erfindung anhand einer Stellantriebsteuerung mit zwei Wegeschiebern dargestellt wird, können anstelle der Wegeschieber auch andere elektrohydraulische Proportionalventile 2, 3 vorgesehen sein. Ferner ist eine erfindungsgemäße Steuereinrichtung auch zum Ansteuern eines hydraulischen Stellantriebs verwendbar, bei der nur ein elektrohydraulisches Proportionalventil vorgesehen ist.

Das Wegeschiebermodul weist für jeden Wegeschieber 2, 3 einen Positionssollwert 9, 10 auf, der mit dem elektrischen Eingang 4, 5 des jeweiligen Wegeschiebers 2, 3 verbunden ist. In der Verbindung ist für jeden Wegeschieber 2, 3 ein Positionsregler 14, 15 vorgesehen, dem neben einem Positionssollwert auch ein Positionsistwert zugeführt wird. Der Positionsistwert stammt, sofern er nicht durch einen Vorgabewert ersetzt wird, aus einer der Positionserfassungseinrichtungen 11, 12, welche die Position des Aktuators 1.1 des Stellantriebes erfasst und einen entsprechenden Positionsistwert erzeugt. Ferner ist eine dritte Positionserfassungseinrichtung 13 vorgesehen, die ebenfalls einen Positionsistwert in Abhängigkeit der Position des Aktuators 1.1 des Stellantriebes erzeugt und zur weiteren Verarbeitung einer Logik des Wegeschiebermoduls zurückführt. Gemäß einer anderen Ausführungsform werden die Positionsistwerte aller drei Positionserfassungseinrichtungen 11, 12, 13 zunächst derart verarbeitet, dass einer dieser Positionsistwerte oder auch ein Mittelwert der Positionsistwerte als geeignet auswählt wird, insbesondere in der Logik des Wegeschiebermoduls, und allen Positionsreglern 14, 15 zugeführt wird.

Neben diesem Positionsistwert der dritten Positionserfassungseinrichtung 13 kann der Logik beispielsweise zusätzlich der gemessene hydraulische Druck aus jedem hydraulischen Ausgang 6, 7 der beiden Wegeschieber 2, 3 zugeführt werden, wie in der Figur 2 dargestellt ist. Die der Logik zugeführten Werte können als analoge Werte oder gemäß einer anderen Ausführungsform auch als digitale Werte vorliegen.

Es sind vier elektronische Schalteinrichtungen 16, 17, 18, 19 vorgesehen. Die erste elektronische Schalteinrichtung 16 weist einen Positionsistwerteingang 32 für den Positionsistwert der ersten Positionserfassungseinrichtung 11 auf, ferner einen Vorgabewerteingang 22 und einen Positionsistwertausgang 34. Der Positionsistwertausgang 34 ist mit dem Positionsregler 14 des ersten Wegeschiebers 2 verbunden. Wie dargestellt, erfolgt alternativ eine 1 von 2 Auswahl oder eine 1 von 3 oder 2 von 3 Auswahl der Positionsistwerte aller Positionserfassungseinrichtungen 11, 12, 13 und der oder die ausgewählten Positionsistwerte werden der ersten elektronischen Schalteinrichtung 16 zugeführt.

Die zweite elektronische Schalteinrichtung 17 weist einen Positionsistwerteingang 33 auf, an welchem der Positionsistwert aus der zweiten Positionserfassungseinrichtung 12 anliegt und der entsprechend mit der zweiten Positionserfassungseinrichtung 12 verbunden ist. Ferner weist die zweite Schalteinrichtung 17 einen Vorgabewerteingang 23 auf, sowie einen Positionsistwertausgang 35. Der Positionsistwertausgang 35 ist mit dem Positionsregler 15 des zweiten Wegeschiebers 3 verbunden. Auch hier gilt das zur 1 von 2 Auswahl beziehungsweise zur 1 von 3 oder 2 von 3 Auswahl zum ersten Wegeschieber 2 Gesagte.

Die dritte elektronische Schalteinrichtung 18 ist eingangsseitig mit dem Positionssollwerteingang 9 und ausgangsseitig mit dem Positionsregler 14 des ersten Wegeschiebers 2 verbunden. Ferner weist sie einen Vorgabewerteingang 20 auf. Solange keine Fehlfunktion festgestellt wird, wird der Vorgabewerteingang 20 mit dem Positionsregler 14 verbunden, um anstelle des am Sollwerteingang 9 anliegenden Positionssollwertes einen variierten Positionssollwert zur Ansteuerung des ersten Wegeschiebers 2 zu verwenden. Nur wenn eine Fehlfunktion festgestellt wird, wird der Positionssollwerteingang 9 direkt mit dem Ausgang der dritten elektronischen Schalteinrichtung 18 verbunden und dem ersten Wegeschieber 2 als Sollwert zugeführt.

Die vierte elektronische Schalteinrichtung 19 weist gleichfalls einen Vorgabewerteingang 21 auf und ist eingangsseitig mit dem Positionssollwerteingang 10 verbunden, sowie ausgangsseitig mit dem Positionsregler 15 des zweiten Wegeschiebers 3. Auch hier wird, solange keine Fehlfunktion festgestellt wurde, der Vorgabewert aus dem Vorgabewerteingang dem Positionsregler 15 des zweiten Wegeschiebers 3 zugeführt. Im Fehlerfall hingegen wird der Sollwert des Positionssollwerteingangs 10 dem Positionsregler 15 des zweiten Wegeschiebers 3 zugeführt.

Die zu den dritten und vierten elektronischen Schalteinrichtungen 18, 19 beschriebene Funktionalität, dass solange keine Fehlfunktion festgestellt wird, der Vorgabewerteingang mit dem Ausgang verbunden wird, und wenn eine Fehlfunktion festgestellt wird, der Positionssollwerteingang mit dem Ausgang verbunden wird, ist auch bei der ersten und/oder zweiten elektronischen Schalteinrichtung 16, 17 anwendbar. Hier wird entsprechende entweder der Positionsistwerteingang 32, 33 (Fehlfunktion festgestellt) oder der Vorgabewerteingang 22, 23 (keine Fehlfunktion festgestellt) mit dem Positionsistwertausgang 34, 35 verbunden.

Auch bei den Sollwerten von extern kann eine 1 von 2, 1 von 3 oder 2 von 3 Auswahl vorgesehen sein.

Jede Schalteinrichtung 16, 17, 18, 19 weist einen Schalteingang 24 auf, mittels welchem sie durch Anlegen eines Signals beziehungsweise einer Spannung oder einer Stromstärke zum Ersatz des eingangsseitigen Positionsistwertes beziehungsweise Positionssollwertes durch den Vorgabewert am Vorgabewerteingang 20, 21, 22, 23 schaltbar ist, sodass entsprechend im geschalteten Zustand der Vorgabewert des Vorgabewerteingangs ausgangsseitig der Schalteinrichtung 16, 17, 18, 19 anliegt und dem entsprechenden Positionsregler 14, 15 zugeführt wird. Obwohl hier eine Hardware-Lösung, beispielsweise mit Relais, dargestellt ist, könnten die Schalteirichtungen 16, 17, 18, 19 auch softwareimplementiert ausgeführt sein.

Wie durch die gestrichelten Linien dargestellt ist, können zahlreiche Signale und/oder Drücke zu ihrer weiteren Verarbeitung in einer elektronischen Steuereinrichtung beziehungsweise Steuerlogik des Wegeschiebermoduls rückgeführt werden.

Obwohl dies in der Figur 2 nicht dargestellt ist, kann analog der Figur 1 eine Druckversorgung, insbesondere mit Pumpe und Hydrauliktank, vorgesehen sein, um den notwendigen hydraulischen Druck für die Wegeschieber 2, 3 zur Verfügung zu stellen.

Durch die erfindungsgemäße Steuervorrichtung beziehungsweise die Stellantriebsteuerung und das erfindungsgemäße Verfahren können von extern vorgegebene Positionssollwerte, hier beispielsweise des Leitsystems 30, durch Vorgabewerte ersetzt werden, die einem geänderten Positionssollwert entsprechen, um die erfindungsgemäße Sollwertmanipulation durchzuführen, um einen zu langen stationären Zustand zu vermeiden und die Reaktionsgeschwindigkeit des Systems zu verbessern, oder um einen Funktionstest, wie dargestellt, durchzuführen.

## Patentansprüche

1. Verfahren zum Ansteuern eines hydraulischen Stellantriebes (1), der einen Aktuator (1.1) aufweist, dessen Position mit wenigstens einem elektrohydraulischen Proportionalventil (2, 3), das wenigstens einen elektrischen Eingang (4, 5) und wenigstens einen hydraulischen Ausgang (6, 7) aufweist, eingestellt wird, mit den folgenden Schritten:
1.1 die Position des Aktuators (1.1) wird erfasst und hieraus ein Positionsistwert erzeugt;
1.2 es wird ein Positionssollwert in Abhängigkeit einer Vorgabe für eine gewünschte Position des Aktuators (1.1) vorgegeben und mit dem wenigstens einen elektrohydraulischen Proportionalventil (2, 3) eine Soll-/Istwert-Differenz ausgeregelt, sodass der Aktuator (1.1) eine Position entsprechend dem Positionssollwert einnimmt; wobei
1.3 der Positionssollwert auch bei einer unveränderten Vorgabe für eine gewünschte Position des Aktuators (1.1) variiert wird;
**dadurch gekennzeichnet, dass**
der hydraulische Stellantrieb (1) wenigstens zwei elektrohydraulische Proportionalventile (2, 3) aufweist, die jeweils wenigstens einen elektrischen Eingang (4, 5) und wenigstens einen hydraulischen Ausgang (6, 7) aufweisen und deren hydraulische Ausgänge (6, 7) zur Ansteuerung des Stellantriebes (1) mit einem gemeinsamen hydraulischen Eingangsdruck zusammengeschaltet sind;
wobei bei der Positionssollwertmanipulation des einem der elektrohydraulischen Proportionalventile (2, 3) zugeführten Positionssollwertes eine Druckänderung in dem hydraulischen Ausgang (6, 7) dieses elektrohydraulischen Proportionalventiles (2, 3) durch eine mit dem wenigstens einen anderen elektrohydraulischen Proportionalventil (2, 3) eingestellte Änderung des Druckes in dessen hydraulischen Ausgang (6, 7) kompensiert wird, um den gemeinsamen hydraulischen Eingangsdruck für den Stellantrieb (1) konstant zu halten.

2. Verfahren gemäß Anspruch 1, **dadurch gekennzeichnet, dass** die Variation des Positionssollwertes in Form einer regelmäßigen oder unregelmäßigen Schwingungsüberlagerung auf den in Abhängigkeit der Vorgabe für die gewünschte Position des Aktuators (1.1) vorgegebenen Sollwert erfolgt.

3. Verfahren gemäß Anspruch 1, **dadurch gekennzeichnet, dass** die Variation des Positionssollwertes in Form diskreter Vergrößerungen und/oder Reduzierungen des in Abhängigkeit der Vorgabe für die gewünschte Position des Aktuators (1.1) vorgegebenen Sollwertes erfolgt.

4. Verfahren gemäß einem der Ansprüche 1 bis 3, **dadurch gekennzeichnet, dass** zusätzlich zu der Sollwertvariation die Funktion der elektrohydraulischen Proportionalventile (2, 3) und insbesondere weiterer zur Ansteuerung verwendeter Komponenten dadurch getestet wird, dass nacheinander die den elektrohydraulischen Proportionalventilen (2, 3) zugeführten Sollwerte gezielt reduziert werden und überwacht wird, ob sich der Druck im jeweiligen hydraulischen Ausgang (6, 7) entsprechend ändert.

5. Verfahren gemäß Anspruch 4, **dadurch gekennzeichnet, dass** bei dem Test die Druckreduzierung in einem hydraulischen Ausgang (6, 7) durch einen eingestellten Druckanstieg in einem anderen hydraulischen Ausgang (6, 7) kompensiert wird, um den gemeinsamen hydraulischen Eingangsdruck für den Stellantrieb (1) konstant zu halten.

6. Verfahren gemäß einem der Ansprüche 1 bis 5, **dadurch gekennzeichnet, dass** nach einer Kompensation durch Änderung des Druckes in dem anderen hydraulischen Ausgang (6, 7) die Drücke in den hydraulischen Ausgängen (6, 7) einander wieder angeglichen werden.

7. Verfahren gemäß einem der Ansprüche 1 bis 6, **dadurch gekennzeichnet, dass** die Variation des Positionssollwertes und/oder der Test abschaltbar ist.

8. Verfahren gemäß einem der Ansprüche 1 bis 7, **dadurch gekennzeichnet, dass** die Position des Aktuators (1.1) mit zwei oder drei Positionserfassungseinrichtungen (11, 12, 13) erfasst wird und aus den von den Positionserfassungseinrichtungen (11, 12, 13) erzeugten Positionsistwerten eine 1 von 2, 1 von 3 oder 2 von 3 Auswahl durchgeführt wird, wobei der oder die ausgewählten Positionsistwerte zur Ausregelung herangezogen werden.

9. Steuereinrichtung zum Ansteuern von wenigstens einem elektrohydraulischen Proportionalventil (2, 3) zur Ansteuerung eines einen Aktuator (1.1) umfassenden hydraulischen Stellantriebes (1), wobei die Steuereinrichtung Ein- und Ausgänge für wenigstens einen Positionsistwert und Positionssollwert der Position des Aktuators (1.1) aufweist und eingerichtet ist, ein Verfahren gemäß einem der Ansprüche 1 bis 8 auszuführen.

10. Stellantriebsteuerung zur Ansteuerung eines hydraulischen Stellantriebes (1), der einen Aktuator (1.1) aufweist;
mit wenigstens zwei redundant angeordneten elektrohydraulischen Proportionalventilen (2, 3) zur Erzeugung eines hydraulischen Eingangsdruckes für den Stellantrieb (1); wobei
jedes elektrohydraulische Proportionalventil (2, 3) wenigstens einen elektrischen Eingang (4, 5) und wenigstens einen hydraulischen Ausgang (6, 7) aufweist; und
die hydraulischen Ausgänge (6, 7) der wenigstens zwei elektrohydraulischen Proportionalventile (2, 3) über eine gemeinsame hydraulische Druckauswahleinrichtung (8) zur Ansteuerung des Stellantriebes (1) mit einem gemeinsamen Eingangsdruck zusammengeschaltet sind;
mit einem Positionssollwerteingang (9, 10) für jedes elektrohydraulische Proportionalventil (2, 3), der mit dem elektrischen Eingang (4, 5) des jeweiligen elektrohydraulischen Proportionalventils (2, 3) verbunden ist; mit wenigstens einer Positionserfassungseinrichtung (11, 12, 13) zur Erfassung der Position des Aktuators (1.1) des Stellantriebes (1); wobei die Positionserfassungseinrichtung (11, 12, 13) einen Positionsistwert erzeugt; und
jedes elektrohydraulische Proportionalventil (2, 3) einen Positionsregler (14, 15) umfasst, der mit einem Positionssollwert aus dem Positionssollwerteingang (9, 10) und dem Positionsistwert aus der Positionserfassungseinrichtung (11, 12, 13) zur Ausregelung einer Soll-/Istwert-Differenz ausgeführt ist; wobei die Druckauswahleinrichtung (8) als Maximaldruckauswahleinrichtung ausgeführt ist, und **dadurch gekennzeichnet, dass** wenigstens eine elektronische Schalteinrichtung (16, 17, 18, 19) vorgesehen ist, mit welcher wahlweise wenigstens ein Positionssollwert aus einem Positionssollwerteingang (9, 10) und/oder ein Positionsistwert aus der Positionserfassungseinrichtung (11, 12, 13) durch einen Vorgabewert ersetzbar ist.

11. Stellantriebsteuerung gemäß Anspruch 10, **dadurch gekennzeichnet, dass** mehrere elektronische Schalteinrichtungen (16, 17, 18, 19) vorgesehen sind, die einzeln zum Ersatz eines Positionssollwertes oder Positionsistwertes schaltbar sind.

12. Stellantriebsteuerung gemäß einem der Ansprüche 10 oder 11, **dadurch gekennzeichnet, dass** wenigstens zwei oder drei Positionserfassungseinrichtungen (11, 12, 13) zur Erzeugung jeweils eines Positionsistwertes in Abhängigkeit der Position des Aktuators (1.1) vorgesehen sind.

13. Stellantriebsteuerung gemäß Anspruch 11 und Anspruch 12, **dadurch gekennzeichnet, dass** die zwei oder drei Positionserfassungseinrichtungen (11, 12, 13) derart mit wenigstens zwei Schalteinrichtungen (16, 17, 18, 19) verschaltet ist/sind, dass ein erster Positionsistwert einer ersten Schalteinrichtung (16) rückgeführt wird, ein zweiter Positionsistwert einer zweiten Schalteinrichtung (17) rückgeführt wird und ein dritter Positionsistwert als Reservepositionsistwert bei Ausfall wenigstens einer der beiden anderen Positionsistwerte rückgeführt wird, oder dass aus den Positionsistwerten der zwei oder drei Positionserfassungseinrichtungen (11, 12, 13) eine 1 von 2, 1 von 3 oder 2 von 3 Auswahl getroffen wird und der ausgewählte Positionsistwert oder die ausgewählten Positionsistwerte den beiden Schalteinrichtungen (16, 17) rückgeführt wird/werden.

14. Stellantriebsteuerung gemäß einem der Ansprüche 11 bis 13, **dadurch gekennzeichnet, dass** vier elektronische Schalteinrichtungen (16, 17, 18, 19) vorgesehen sind, von denen zwei elektronische Schalteinrichtungen (18, 19) jeweils mit einem der Positionssollwerteingänge (9, 10) und dem Positionsregler (14, 15) jeweils eines elektrohydraulischen Proportionalventils (2, 3) verschaltet sind und ferner jeweils einen Vorgabewerteingang (20, 21) aufweisen, und zwei elektronische Schalteinrichtungen (16, 17) jeweils mit dem Positionsregler (14, 15) jeweils eines elektrohydraulischen Proportionalventils (2, 3) und jeweils einer Positionserfassungseinrichtung (11, 12) verschaltet sind und ferner jeweils einen Vorgabewerteingang (22, 23) aufweisen.

15. Stellantriebsteuerung gemäß einem der Ansprüche 10 bis 14, **dadurch gekennzeichnet, dass** die wenigstens eine Schalteinrichtung (16, 17, 18, 19) oder jede Schalteinrichtung (16, 17, 18, 19) einen Schalteingang (24) aufweist, über welchen sie durch Anlegen eines Signals zum Ersatz eines Positionsistwertes oder eines Positionssollwertes durch einen Vorgabewert schaltbar ist.

16. Ventilsteuervorrichtung mit einem hydraulischen Stellantrieb (1), der einen hydraulisch betätigbaren Aktuator (1.1) umfasst, und mit einer Stellantriebsteuerung gemäß einem der Ansprüche 10 bis 15.

17. Ventilsteuervorrichtung gemäß Anspruch 16, **dadurch gekennzeichnet, dass** der hydraulische Stellantrieb (1) einen Druckraum (1.2) aufweist, der mit der Druckauswahleinrichtung (8) zu seiner Beaufschlagung mit einem hydraulischen Druck in Abhängigkeit der Stellung der beiden elektrohydraulischen Proportionalventile (2, 3) verschaltet ist.

18. Ventilsteuervorrichtung gemäß Anspruch 17, **dadurch gekennzeichnet, dass** der Aktuator (1.1) mit dem hydraulischen Druck in dem Druckraum (1.2) gegen die Kraft einer Vorspannfeder (1.3) betätigbar ist.

## Claims

1. Method for activating a hydraulic actuator drive (1) which has an actuator (1.1), the position of which is set with at least one electrohydraulic proportional valve (2, 3), which has at least one electric input (4, 5) and at least one hydraulic output (6, 7), having the following steps:
1.1 the position of the actuator (1.1) is detected and a current position value is generated therefrom;
1.2 a position setpoint is predefined as a function of a default for a desired position of the actuator (1.1) and, by using the at least one electrohydraulic proportional valve (2, 3), a setpoint/current value difference is regulated, so that the actuator (1.1) assumes a position corresponding to the position setpoint; wherein
1.3 the position setpoint is varied even if a default for a desired position of the actuator (1.1) is unchanged;
**characterized in that**
the hydraulic actuator drive (1) has at least two electrohydraulic proportional valves (2, 3), which each have at least one electric input (4, 5) and at least one hydraulic output (6, 7), and of which the hydraulic outputs (6, 7) are connected together to activate the actuator drive (1) with a common hydraulic input pressure;
wherein, during the position setpoint manipulation of the position setpoint supplied to one of the electrohydraulic proportional valves (2, 3), a pressure change in the hydraulic output (6, 7) of this electrohydraulic proportional valve (2, 3) is compensated for by a change in the pressure in its hydraulic output (6, 7) set by using the at least one other electrohydraulic proportional valve (2, 3), in order to keep the common hydraulic input pressure for the actuator drive (1) constant.

2. Method according to Claim 1, **characterized in that** the variation in the position setpoint is carried out in the form of a regular or irregular oscillatory superimposition on the setpoint predefined as a function of the default for the desired position of the actuator (1.1) .

3. Method according to Claim 1, **characterized in that** the variation in the position setpoint is carried out in the form of discrete increases and/or reductions in the setpoint predefined as a function of the default for the desired position of the actuator (1.1).

4. Method according to one of Claims 1 to 3, **characterized in that**, in addition to the setpoint variation, the function of the electrohydraulic proportional valves (2, 3) and in particular further components used for the activation is tested **in that** the setpoints supplied to the electrohydraulic proportional valves (2, 3) are successively specifically reduced and it is monitored as to whether the pressure in the respective hydraulic output (6, 7) changes accordingly.

5. Method according to Claim 4, **characterized in that**, during the test, the pressure reduction in one hydraulic output (6, 7) is compensated for by a set pressure rise in another hydraulic output (6, 7), in order to keep the common hydraulic input pressure for the actuator drive (1) constant.

6. Method according to one of Claims 1 to 5, **characterized in that**, following a compensation by means of changing the pressure in the other hydraulic output (6, 7), the pressures in the hydraulic outputs (6, 7) are equalized with each other again.

7. Method according to one of Claims 1 to 6, **characterized in that** the variation in the position setpoint and/or the test can be switched off.

8. Method according to one of Claims 1 to 7, **characterized in that** the position of the actuator (1.1) is detected by using two or three position detection devices (11, 12, 13), and, from the current position values generated by the position detection devices (11, 12, 13), a 1 from 2, 1 from 3 or 2 from 3 selection is made, wherein the current position value or values selected is/are used for the regulation.

9. Control device for activating at least one electrohydraulic proportional valve (2, 3) for activating a hydraulic actuator drive (1) comprising an actuator (1.1), wherein the control device has inputs and outputs for at least one current position value and position setpoint of the position of the actuator (1.1) and is set up to carry out a method according to one of Claims 1 to 8.

10. Actuator drive controller for activating a hydraulic actuator drive (1) which has an actuator (1.1);
having at least two redundantly arranged electrohydraulic proportional valves (2, 3) for generating a hydraulic input pressure for the actuator drive (1); wherein
each electrohydraulic proportional valve (2, 3) has at least one electric input (4, 5) and at least one hydraulic output (6, 7); and
the hydraulic outputs (6, 7) of the at least two electrohydraulic proportional valves (2, 3) are connected together via a common hydraulic pressure selection device (8) to activate the actuator drive (1) with a common input pressure;
having a position setpoint input (9, 10) for each electrohydraulic proportional valve (2, 3), which is connected to the electric input (4, 5) of the respective electrohydraulic proportional valve (2, 3);
having at least one position detection device (11, 12, 13) for detecting the position of the actuator (1.1) of the actuator drive (1); wherein the position detection device (11, 12, 13) generates a current position value; and
each electrohydraulic proportional valve (2, 3) comprises a position controller (14, 15), which is designed to regulate a setpoint/current value difference from a position setpoint from the position setpoint input (9, 10) and the current position value from the position detection device (11, 12, 13); wherein the pressure selection device (8) is designed as a maximum pressure selection device, and **characterized in that** at least one electronic switching device (16, 17, 18, 19) is provided, with which at least one position setpoint from a position setpoint (9, 10) and/or a current position value from the position detection device (11, 12, 13) can optionally be replaced by a default value.

11. Actuator drive controller according to Claim 10, **characterized in that** a plurality of electronic switching devices (16, 17, 18, 19) are provided, which can be controlled individually to replace a position setpoint or current position value.

12. Actuator drive controller according to either of Claims 10 and 11, **characterized in that** at least two or three position detection devices (11, 12, 13) are provided to generate a respective current position value as a function of the position of the actuator (1.1).

13. Actuator drive controller according to Claim 11 and Claim 12, **characterized in that** the two or three position detection devices (11, 12, 13) are connected to at least two switching devices (16, 17, 18, 19) in such a way that a first current position value is fed back to a first switching device (16), a second current position value is fed back to a second switching device (17), and a third current position value is fed back as a reserve current position value in the event of failure of at least one of the two other current position values, or **in that** a 1 from 2, 1 from 3 or 2 from 3 selection is made from the current position values from the two or three position detection devices (11, 12, 13), and the selected current position value or the selected current position values is/are fed back to the two switching devices (16, 17).

14. Actuator drive controller according to one of Claims 11 to 13, **characterized in that** four electronic switching devices (16, 17, 18, 19) are provided, of which two electronic switching devices (18, 19) are each connected to one of the position setpoint inputs (9, 10) and the position controller (14, 15) of a respective electrohydraulic proportional valve (2, 3) and, in addition, each have a default value input (20, 21), and two electronic switching devices (16, 17) are each connected to the position controller (14, 15) of a respective electrohydraulic proportional valve (2, 3) and a respective position detection device (11, 12) and, in addition, each have a default value input (22, 23).

15. Actuator drive controller according to one of Claims 10 to 14, **characterized in that** the at least one switching device (16, 17, 18, 19) or each switching device (16, 17, 18, 19) has a switching input (24) via which, by applying a signal, it can be switched to replace a current position value or a position setpoint by a default value.

16. Valve control device having a hydraulic actuator drive (1) which comprises a hydraulically operable actuator (1.1), and having an actuator drive controller according to one of Claims 10 to 15.

17. Valve control device according to Claim 16, **characterized in that** the hydraulic actuator drive (1) has a pressure chamber (1.2), which is connected to the pressure selection device (8) in order to apply a hydraulic pressure to the latter as a function of the position of the two electrohydraulic proportional valves (2, 3).

18. Valve control device according to Claim 17, **characterized in that** the actuator (1.1) can be operated by the hydraulic pressure in the pressure chamber (1.2) against the force of a preloading spring (1.3).

## Revendications

1. Procédé permettant de piloter un actionneur hydraulique (1) qui présente un dispositif d'actionnement (1.1) dont la position est réglée par au moins une vanne proportionnelle électrohydraulique (2, 3) qui présente au moins une entrée électrique (4, 5) et au moins une sortie hydraulique (6, 7), comprenant les étapes suivantes :
1.1 la position du dispositif d'actionnement (1.1) est détectée et une valeur réelle de position est générée à partir de celle-ci ;
1.2 une valeur théorique de position est spécifiée en fonction d'une spécification pour une position souhaitée du dispositif d'actionnement (1.1), et une différence entre valeur théorique et valeur réelle est régulée par ladite au moins une vanne proportionnelle électrohydraulique (2, 3) de sorte que le dispositif d'actionnement (1.1) occupe une position correspondant à la valeur théorique de position ; dans lequel
1.3 la valeur théorique de position est amenée à varier même dans le cas d'une spécification inchangée pour une position souhaitée du dispositif d'actionnement (1.1) ;
**caractérisé en ce que** l'actionneur hydraulique (1) présente au moins deux vannes proportionnelles électrohydrauliques (2, 3) qui présentent respectivement au moins une entrée électrique (4, 5) et au moins une sortie hydraulique (6, 7) et dont les sorties hydrauliques (6, 7) sont interconnectées pour piloter l'actionneur (1) avec une pression d'entrée hydraulique commune ;
dans lequel, lors de la manipulation de valeur théorique de position de la valeur théorique de position amenée à l'une des vannes proportionnelles électrohydrauliques (2, 3), un changement de pression dans la sortie hydraulique (6, 7) de cette vanne proportionnelle électrohydraulique (2, 3) est compensé par un changement de la pression réglée par ladite au moins une autre vanne proportionnelle électrohydraulique (2, 3) dans sa sortie hydraulique (6, 7) afin de maintenir constante la pression d'entrée hydraulique commune pour l'actionneur (1).

2. Procédé selon la revendication 1, **caractérisé en ce que** la variation de la valeur théorique de position est effectuée sous la forme d'une superposition d'oscillation régulière ou irrégulière sur la valeur théorique spécifiée en fonction de la spécification pour la position souhaitée du dispositif d'actionnement (1.1).

3. Procédé selon la revendication 1, **caractérisé en ce que** la variation de la valeur théorique de position est effectuée sous la forme d'augmentations et/ou de réductions discrètes de la valeur théorique spécifiée en fonction de la spécification pour la position souhaitée du dispositif d'actionnement (1.1).

4. Procédé selon l'une quelconque des revendications 1 à 3, **caractérisé en ce qu'**en plus de la variation de valeur théorique, la fonction des vannes proportionnelles électrohydrauliques (2, 3) et en particulier d'autres composants utilisés pour le pilotage est testée **en ce que**, l'une après l'autre, les valeurs théoriques amenées aux vannes proportionnelles électrohydrauliques (2, 3) sont réduites de manière ciblée, et on surveille si la pression dans la sortie hydraulique (6, 7) respective change en conséquence.

5. Procédé selon la revendication 4, **caractérisé en ce qu'**à l'occasion du test, la réduction de pression dans une sortie hydraulique (6, 7) est compensée par une montée en pression réglée dans une autre sortie hydraulique (6, 7) afin de maintenir constante la pression d'entrée hydraulique commune pour l'actionneur (1) .

6. Procédé selon l'une quelconque des revendications 1 à 5, **caractérisé en ce qu'**après une compensation par un changement de la pression dans l'autre sortie hydraulique (6, 7), les pressions dans les autres sorties hydrauliques (6, 7) sont à nouveau harmonisées les unes par rapport aux autres.

7. Procédé selon l'une quelconque des revendications 1 à 6, **caractérisé en ce que** la variation de la valeur théorique de position et/ou le test peuvent être désactivés.

8. Procédé selon l'une quelconque des revendications 1 à 7, **caractérisé en ce que** la position du dispositif d'actionnement (1.1) est détectée par deux ou trois dispositifs de détection de position (11, 12, 13), et à partir des valeurs réelles de position, générées par les dispositifs de détection de position (11, 12, 13), une sélection 1 sur 2, 1 sur 3 ou 2 sur 3 est effectuée, la ou les valeurs réelles de position sélectionnées étant utilisées pour la régulation.

9. Dispositif de commande permettant de piloter au moins une vanne proportionnelle électrohydraulique (2, 3) pour le pilotage d'un actionneur (1) comprenant un dispositif d'actionnement (1.1), le dispositif de commande présentant des entrées et des sorties pour au moins une valeur réelle de position et une valeur théorique de position de la position du dispositif d'actionnement (1.1) et est aménagé pour effectuer un procédé selon l'une quelconque des revendications 1 à 8.

10. Commande d'actionneur permettant de piloter un actionneur hydraulique (1) qui présente un dispositif d'actionnement (1.1) ;
comprenant au moins deux vannes proportionnelles électrohydrauliques (2, 3) disposées de manière redondante pour générer une pression d'entrée hydraulique pour l'actionneur (1) ; dans laquelle
chaque vanne proportionnelle électrohydraulique (2, 3) présente au moins une entrée électrique (4, 5) et au moins une sortie hydraulique (6, 7) ; et
les sorties hydrauliques (6, 7) des au moins deux vannes proportionnelles électrohydrauliques (2, 3) sont interconnectées par un dispositif de sélection de pression hydraulique commun (8) pour le pilotage de l'actionneur (1) avec une pression d'entrée commune ;
comprenant une entrée de valeur théorique de position (9, 10) pour chaque vanne proportionnelle électrohydraulique (2, 3) qui est reliée à l'entrée électrique (4, 5) de la vanne proportionnelle électrohydraulique (2, 3) respective ;
comprenant au moins un dispositif de détection de position (11, 12, 13) pour détecter la position du dispositif d'actionnement (1.1) de l'actionneur (1) ; le dispositif de détection de position (11, 12, 13) générant une valeur réelle de position ; et
chaque vanne proportionnelle électrohydraulique (2, 3) comprend un régulateur de position (14, 15) qui est réalisé avec une valeur théorique de position provenant de l'entrée de valeur théorique de position (9, 10) et avec la valeur réelle de position provenant du dispositif de détection de position (11, 12, 13) pour la régulation d'une différence entre la valeur théorique et la valeur réelle ; le dispositif de sélection de pression (8) étant réalisé comme un dispositif de sélection de pression maximale, et
**caractérisée en ce qu'**au moins un dispositif de commutation électronique (16, 17, 18, 19) est prévu qui permet de remplacer au choix au moins une valeur théorique de position provenant d'une entrée de valeur théorique de position (9, 10) et/ou une valeur réelle de position provenant du dispositif de détection de position (11, 12, 13) par une valeur spécifiée.

11. Commande d'actionneur selon la revendication 10, **caractérisée en ce que** plusieurs dispositifs de commutation électroniques (16, 17, 18, 19) sont prévus qui peuvent être commutés individuellement pour remplacer une valeur théorique de position ou une valeur réelle de position.

12. Commande d'actionneur selon l'une quelconque des revendications 10 ou 11, **caractérisée en ce qu'**au moins deux ou trois dispositifs de détection de position (11, 12, 13) sont prévus pour générer respectivement une valeur réelle de position en fonction de la position du dispositif d'actionnement (1.1).

13. Commande d'actionneur selon la revendication 11 et la revendication 12, **caractérisée en ce que** les deux ou trois dispositifs de détection de position (11, 12, 13) sont respectivement connectés avec au moins deux dispositifs de commutation (16, 17, 18, 19) de telle sorte qu'une première valeur réelle de position est ramenée à un premier dispositif de commutation (16), une deuxième valeur réelle de position est ramenée à un deuxième dispositif de commutation (17), et une troisième valeur réelle de position en tant que valeur réelle de position de réserve est ramenée en cas d'absence d'au moins l'une des deux autres valeurs réelles de position, ou **en ce que** parmi les valeurs réelles de position des deux ou trois dispositifs de détection de position (11, 12, 13) une sélection 1 sur 2, 1 sur 3 ou 2 sur 3 est effectuée, et la valeur réelle de position sélectionnée ou les valeurs réelles de position réelles est/sont ramenée(s) aux deux dispositifs de commutation (16, 17).

14. Commande d'actionneur selon l'une quelconque des revendications 11 à 13, **caractérisée en ce que** quatre dispositifs de commutation électroniques (16, 17, 18, 19) sont prévus, dont deux dispositifs de commutation électroniques (18, 19) sont respectivement connectés avec l'une des entrées de valeur théorique de position (9, 10) et avec le régulateur de position (14, 15) respectivement d'une vanne proportionnelle électrohydraulique (2, 3), et présentent en outre respectivement une entrée de valeur spécifiée (20, 21), et deux dispositifs de commutation électroniques (16, 17) sont connectés respectivement avec le régulateur de position (14, 15) respectivement d'une vanne proportionnelle électrohydraulique (2, 3) et respectivement d'un dispositif de détection de position (11, 12) et présentent en outre respectivement une entrée de valeur spécifiée (22, 23).

15. Commande d'actionneur selon l'une quelconque des revendications 10 à 14, **caractérisée en ce que** ledit au moins un dispositif de commutation (16, 17, 18, 19) ou chaque dispositif de commutation (16, 17, 18, 19) présente une entrée de commutation (24) par laquelle il peut être commuté par l'application d'un signal pour le remplacement d'une valeur réelle de position ou d'une valeur théorique de position par une valeur spécifiée.

16. Dispositif de commande de vanne comprenant un actionneur hydraulique (1) qui comprend un dispositif d'actionnement (1.1) pouvant être actionné de manière hydraulique, et comprenant une commande d'actionneur selon l'une quelconque des revendications 10 à 15.

17. Dispositif de commande de vanne selon la revendication 16, **caractérisé en ce que** l'actionneur hydraulique (1) présente une chambre de pression (1.2) qui est connectée avec le dispositif de sélection de pression (8) pour être alimentée par une pression hydraulique en fonction de la position des deux vannes proportionnelles électrohydrauliques (2, 3).

18. Dispositif de commande de vanne selon la revendication 17, **caractérisé en ce que** le dispositif d'actionnement (1.1) peut être actionné par la pression hydraulique dans la chambre de pression (1.2) contre la force d'un ressort de précontrainte (1.3).
